# EUROPEAN PATENT APPLICATION

(11) **EP 1 215 124 A1**
(43) Date of publication of application: **19.06.2002**
(21) Application number: 00830805.8
(22) Date of filing: 05.12.2000
(51) Int. Cl.: B65B 61/18, B31B 1/84, B31B 1/74, B65G 47/84

(54) **Unit for applying opening devices to packages of pourable food products**

(71) Applicant: Tetra Laval Holdings & Finance S.A., 1009 Pully (CH)
(72) Inventor: Desogus, Michele, 41100 Modena (IT); Raimondi, Frederico, 41100 Modena (IT)
(74) Representative: Franzolin, Luigi

(57) **Abstract**

A unit (1) for applying opening devices (2) to packages (3) of pourable food products, the unit having a rotary table (7) with a number of seating devices (8) for seating respective packages (3); and a number of application devices (30) for applying the opening devices (2) to the packages (3); the application devices (30) are connected to the rotary table (7) by respective variable-speed drive assemblies (31) controlled by cams (70, 71) to cyclically vary the rotation speed (ω) of the application devices (30) with respect to the rotation speed (ω₀) of the rotary table (7).

## Description

The present invention relates to a unit for applying opening devices to packages of pourable food products.

As is known, many pourable food products, such as fruit juice, UHT (ultra-high-temperature processed) milk, wine, tomato sauce, etc., are sold in packages made of sterilized packaging material.

A typical example of such a package is the parallelepiped-shaped package for liquid or pourable food products known as Tetra Brik Aseptic (registered trademark), which is formed by folding and sealing a web of laminated packaging material. The packaging material has a multilayer structure comprising a layer of fibrous material, e.g. paper, covered on both sides with layers of heat-seal plastic material, e.g. polyethylene, and, in the case of aseptic packages for long-storage products, such as UHT milk, also comprises a layer of oxygen-barrier material defined, for example, by an aluminium film, which is superimposed on a layer of heat-seal plastic material and is in turn covered with another layer of heat-seal plastic material eventually defining the inner face of the package contacting the food product.

As is known, such packages are made on fully automatic packaging machines, on which a continuous tube is formed from the web-fed packaging material; the web of packaging material is sterilized on the packaging machine itself, e.g. by applying a chemical sterilizing agent, such as a hydrogen peroxide solution, which, after sterilization, is removed, e.g. vaporized by heating, from the surfaces of the packaging material; and the web of packaging material so sterilized is maintained in a closed sterile environment, and is folded and sealed longitudinally to form a vertical tube.

The tube is filled with the sterilized or sterile-processed food product, and is sealed and cut at equally spaced cross sections to form pillow packs, which are then folded mechanically to form the finished, e.g. substantially parallelepiped-shaped, packages.

Alternatively, the packaging material may be cut into blanks, which are formed into packages on forming spindles, and the resulting packages are filled with the food product and sealed. One example of such a package is the so-called "gable-top" package commonly known by the trade name Tetra Rex (registered trademark).

Once formed, packages of the above type may undergo further processing, such as the application of a closable opening device.

The most commonly used opening devices comprise a frame defining an opening and fitted about a pierceable or removable portion of the top wall of the package; and a cap hinged or screwed to the frame and which can be removed to open the package. Other, e.g. slidable, opening devices are also known to be used.

The pierceable portion of the package may be defined, for example, by a so-called "prelaminated" hole, i.e. a hole formed in the fibrous layer of the packaging material before the fibrous layer is joined to the barrier layer, which is thus whole and closes the hole to ensure hermetic, aseptic sealing, while at the same time being easily pierced.

In the case of aseptic packaging machines, the opening devices described are normally fitted continuously straight on to the formed packages on on-line application units downstream from the packaging machine.

Known units for applying opening devices substantially comprise a chain conveyor for feeding the packages successively along a normally straight transfer path; first heating means for locally heating the packages at the pierceable portions; second heating means for heating the opening devices; and application means activated along the transfer path to apply the opening devices on to the packages.

Heat sealing the opening devices, especially in the case of packages with prelaminated holes, calls for extremely accurate positioning of the packages with respect to the application means. Applying the opening device in the wrong position may result in various problems, such as poor adhesion to the package and malfunctioning of the opening device itself, which in turn may result in difficulty in opening the package, product leakage, or splashing when the product is poured out.

Linear conveyors are intrinsically limited in terms of precision, owing to inevitable slack in the chain, so that a demand exists in the industry for some way of enhancing application precision over and above the limits currently permitted by conventional conveyors.

Another problem connected with the application of opening devices is that, as the output rate increases, the hold time of each package at the various work stations on the application unit decreases, so that a maximum limit exists beyond which the output rate cannot be increased any further.

It is an object of the present invention to provide a unit for applying opening devices to packages of pourable food products, designed to eliminate the aforementioned drawbacks, and which, in particular, provides for extremely accurate positioning of the packages and a high output rate.

According to the present invention, there is provided a unit for applying opening devices to packages of pourable food products, the unit comprising a rotary table rotating about a respective axis; a number of seating devices for seating respective said packages, and which are fixed in equally spaced manner to and rotate with said rotary table to feed the packages through a number of work stations; and a number of application devices for applying said opening devices, and which are carried by said rotary table and each associated with a corresponding seating device; said unit also comprising a number of variable-speed drive assemblies connecting said application devices to said rotary table; and control means for cyclically varying the velocity ratio of said drive assemblies, so as to release the rotation speed of said seating devices from the rotation speed of said rotary table at at least one of said work stations.

The present invention therefore employs a rotary table, to which the package seating devices are secured rigidly, so that the positioning accuracy of the seating devices is unaffected by the slack inherent in linear chain conveyors. The application devices, being connected to the rotary table by variable-speed drive assemblies, can rotate about the table axis with a law of motion independent of that of the table itself, and which may be selected arbitrarily and conveniently be such as to rotate the application devices integrally with the rotary table along the transfer path portions between the work stations, and to stop the application devices at work stations requiring a given hold time to perform a given operation, such as loading the opening device on to the application device, and heating the opening device before it is applied to the package.

In a preferred embodiment of the present invention, the variable-speed drive assemblies each comprise an anchoring member fixed rigidly to the rotary table; a slide connected rigidly to the respective application device and mounted to slide along a circumferential guide integral with the table; and a mechanism interposed between the anchoring member and the slide and controlled by the control means to move the slide along the guide.

As such, the present invention also provides for imparting any law of motion to the application devices, with no need for independently driving the devices, thus reducing the size and cost of the unit as a whole.

The control means preferably comprise fixed cam means coaxial with the rotary table and having a profile varying along the path portion corresponding to said at least one station.

Control is thus effected easily and reliably.

A preferred, non-limiting embodiment of the present invention will be described by way of example with reference to the accompanying drawings, in which:
Figure 1 shows a schematic plan view of a unit for applying opening devices to packages of pourable food products in accordance with the present invention;
Figure 2 shows a partial view in perspective of a detail of the Figure 1 unit;
Figures 3 and 4 show a side and top-plan view respectively of the Figure 2 detail;
Figure 5 shows a partial view in perspective, from the opposite side, of the Figure 2 detail;
Figure 6 shows a partial view in perspective of the Figure 1 unit with parts removed for clarity;
Figure 7 shows a graph illustrating the law of motion of an application device on the Figure 1 unit.

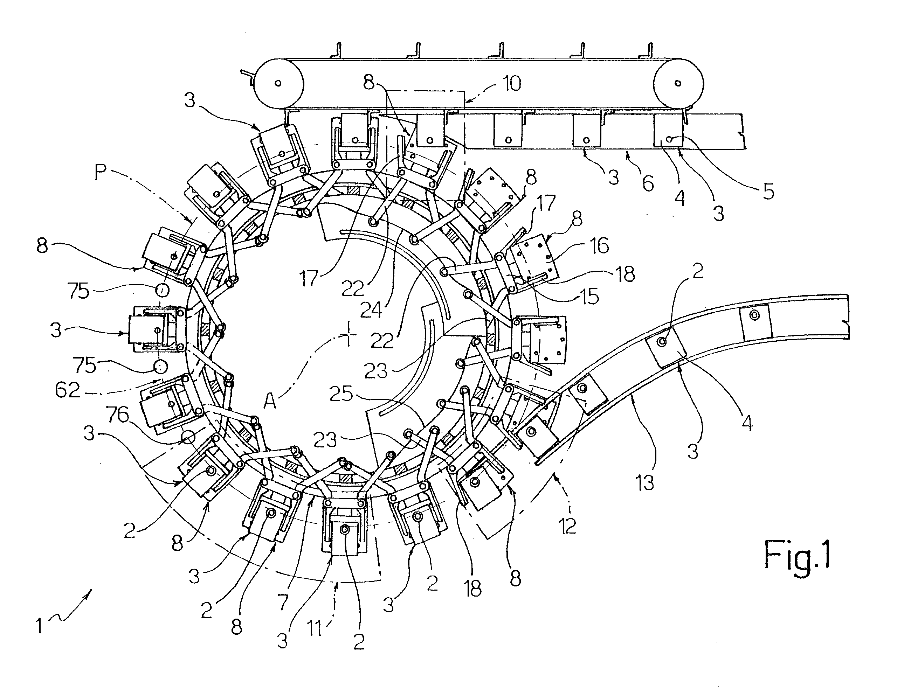

Number 1 in Figure 1 indicates as a whole a unit for applying opening devices 2 to aseptic packages 3 of pourable food products.

Packages 3 are made on a packaging unit (not shown) from a web of sheet packaging material comprising a layer of paper material covered on both sides with layers of heat-seal plastic material, e.g. polyethylene; and a layer of barrier material, e.g. aluminium, located on the inside of the paper material layer and in turn covered on the inside with another layer of plastic material.

A top face 4 of each of packages 3, which, in the example shown are substantially parallelepiped-shaped, has a pierceable portion 5 conveniently defined by a so-called "prelaminated" hole, i.e. a hole formed in the paper layer of the packaging material before the paper layer is joined to the barrier layer, which thus closes the hole to ensure hermetic, aseptic sealing, while at the same time being easily pierced.

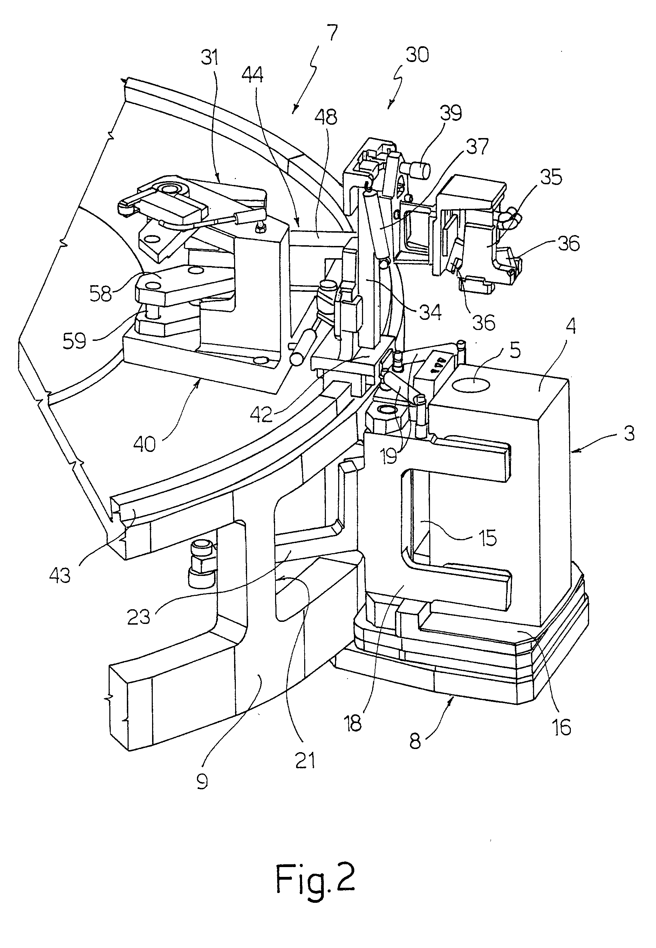

Unit 1 comprises a rotary table 7, of axis A, rotated about its axis at constant speed by conventional drive means not shown. Rotary table 7 supports a number of seating devices 8 for seating packages 3, and which are fixed in equally spaced manner to, and project radially from, a substantially cylindrical peripheral lateral wall 9 of rotary table 7 (Figure 2).

Devices 8 receive respective packages 3 from a known input conveyor 6 tangent to rotary table 7 at a supply station 10 and for conveying packages 3 in equally spaced manner and at a constant speed equal to the linear speed of devices 8. Rotating together with rotary table 7, devices 8 feed packages 3 along a circular path P through an application station 11 for applying opening devices 2 and up to an unloading station 12 where packages 3 are removed by an output conveyor 13.

More specifically, each device 8 (Figure 2) comprises a vertical wall or back 15 fixed to wall 9 of rotary table 7; a base 16 on which a respective package 3 rests; and two lateral retaining members 17, 18 hinged to the sides of vertical wall 15 and loaded by respective springs 19 so as to cooperate with respective lateral faces of package 3 and keep the package steady on base 16 throughout the time it remains on rotary table 7.

Members 17 and 18, which are located down- and upstream respectively of respective package 3 along path P, have respective control arms 22, 23 extending inwards of rotary table 7 through openings 21 in wall 9, and which interact with respective fixed cams 24, 25 close to stations 10, 12 respectively (Figure 1).

Cam 24 acts on arms 22 to produce a rotary opening movement of members 17, i.e. away from the corresponding members 18, and so permit insertion of packages 3 inside respective devices 8 without interfering with members 17. Similarly, cam 25 acts on arms 23 to produce a rotary opening movement of members 18 at unloading station 12 and so permit withdrawal of packages 3 without interfering with members 18 (Figure 1).

Unit 1 also comprises a number of application devices 30 (Figures 2-4) carried by rotary table 7 and each associated with a respective seating device 8. According to the present invention, application devices 30 are connected to rotary table 7 by respective variable-speed drive assemblies 31, as described in detail below.

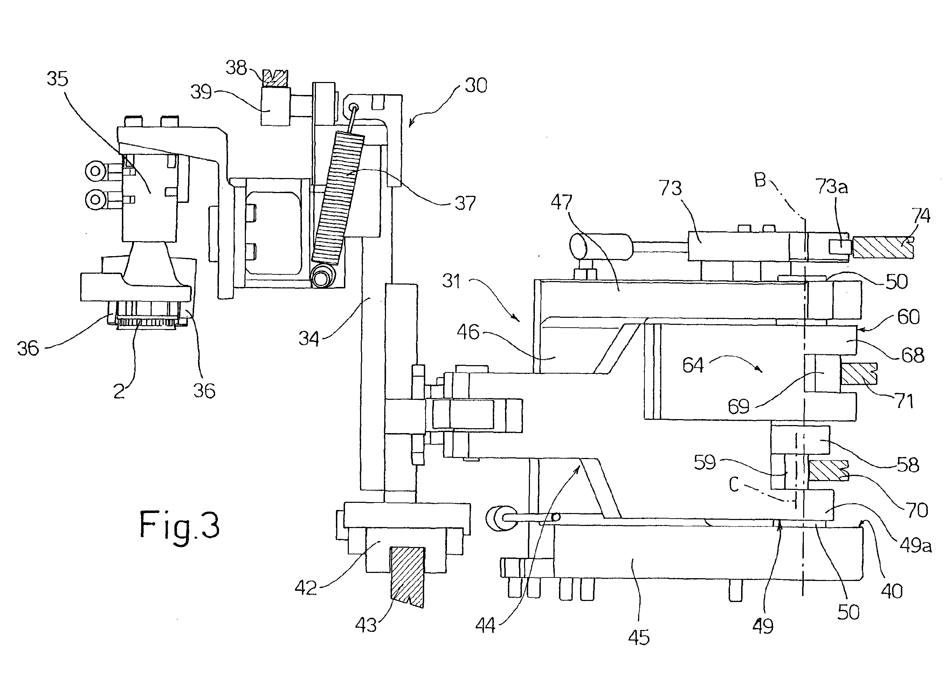

Each application device 30 comprises a vertical guide 34 secured to rotary table 7 by respective assembly 31; and an operating head 35 having jaws 36 for gripping an opening device 2, and which is movable along guide 34 between a raised rest position (Figure 3) and a lowered work position in which opening device 2 is pressed on to package 3 at prelaminated hole 5. The operating head is maintained in the rest position by springs 37; and the movement of operating head 35 is controlled by a fixed cam 38 (only shown in Figure 3) extending along path P at application station 11 and over rotary table 7, and which cooperates with a cam follower 39 fixed to operating head 35.

Each assembly 31 comprises an anchoring member 40 fixed to a top wall 41 of rotary table 7, close to a respective device 8; a slide 42 connected rigidly to respective application device 30 and mounted to slide along a circumferential guide 43 integral with rotary table 7; and a mechanism 44 interposed between anchoring member 40 and slide 42 (Figures 3, 4, 5).

Anchoring member 40 comprises a base 45 fixed rigidly to rotary table 7; an upright 46 integral with base 45; and an arm 47 projecting from the top end of upright 46 and parallel to base 45.

Mechanism 44 comprises a control arm 48 hinged, close to one end 49, to anchoring member 40 about a vertical axis B and projecting outwards of rotary table 7 from anchoring member 40. More specifically, control arm 48 is hinged to anchoring member 40 by two hinges 50 of axis B, one of which is interposed between base 45 of anchoring member 40 and a bottom end appendix 49a of control arm 48, and the other of which is interposed between arm 47 of anchoring member 40 and a top end appendix 49b of control arm 48.

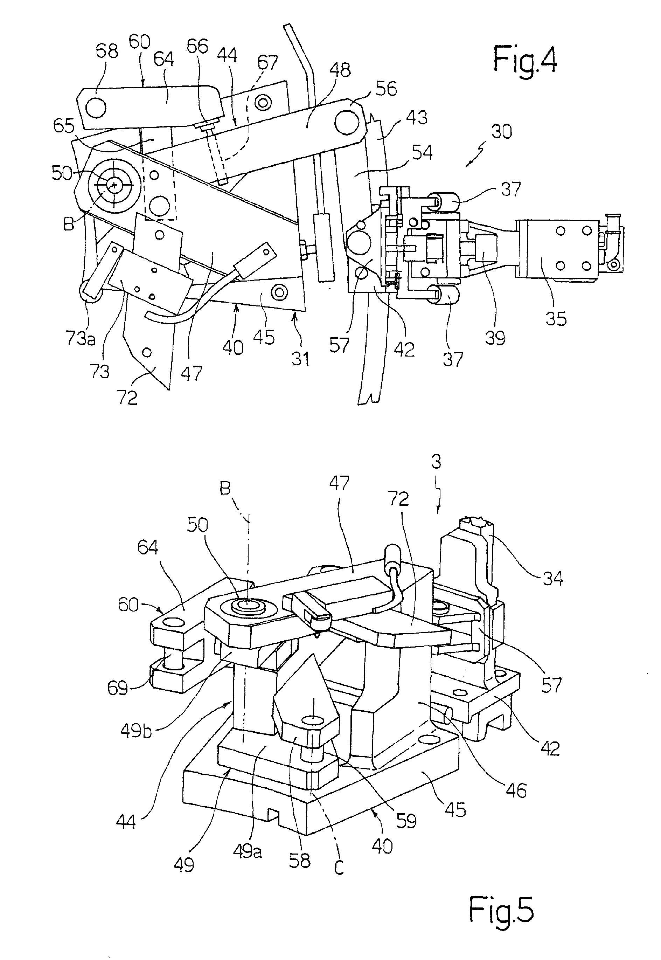

Mechanism 44 also comprises a rod 54 extending substantially tangentially with respect to rotary table 7 (Figure 4) and having a first end hinged to a free end 56 of control arm 48 opposite end appendixes 49a, 49b, and a second end hinged to a bracket 57 fixed to slide 42.

Control arm 48 comprises a further appendix 58 parallel to bottom appendix 49a, so as to form, with bottom appendix 49a, a substantially fork-shaped support for a first cam follower roller 59 having a vertical axis C and for the purpose explained later on.

Mechanism 44 also comprises a substantially T-shaped auxiliary member 60 defined by a bar 64, and by a stem 65 extending perpendicularly from an intermediate portion of bar 64 and hinged to control arm 48, close to top appendix 49b, about a vertical axis D. Bar 64 has one end 65 facing the free end 56 of control arm 48 and connected by an articulated joint 66 to an adjusting screw 67 screwed inside control arm 48, and an opposite fork-shaped end 68 supporting a second cam follower roller 69.

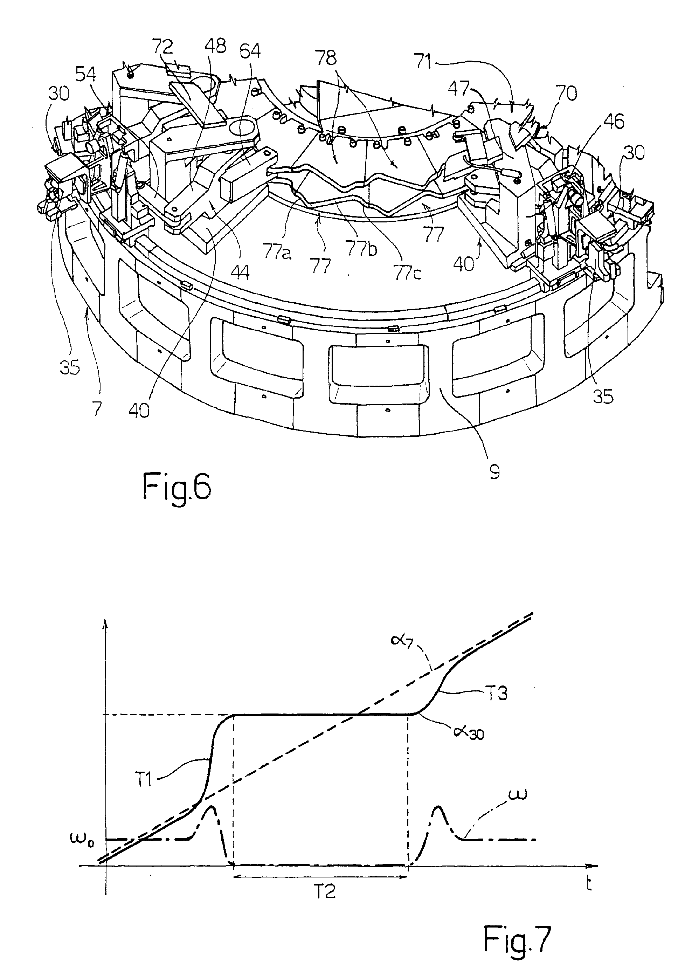

Cam follower rollers 59, 69 are conveniently located at different heights, and cooperate with respective fixed cams 70, 71 of axis A (Figure 6) as table 7 rotates.

Auxiliary member 60 is connected rigidly to control arm 48 and is adjustable in position by means of screw 67 so as to take up any slack and ensure both cam follower rollers 59, 69 are maintained contacting respective cams 70, 71.

The instantaneous position of control arm 48 is determined unequivocally by the constraints defined by hinges 50 and by cam follower rollers 59, 69 rolling along respective cams 70, 71, which act on the arm in opposite directions.

Anchoring members 40 are connected to one another by a number of interconnecting plates 72, each of which is fixed "bridge-fashion" to respective arms 47 of two adjacent anchoring members for greater structural rigidity.

By means of a conventional device not shown, opening devices 2 are conveniently supplied successively to unit 1 at supply station 10, where they are picked up by jaws 36 of each application device 30. Jaws 36 are opened and closed by a pneumatic actuator (not shown) housed in operating head 35 and activated by a mechanically controlled valve 73 carried by respective anchoring member 40, and a control roller 73a of which interacts with a fixed cam 74 (shown schematically in Figure 3) coaxial with rotary table 7, so as to close the jaws at station 10 as soon as opening device 2 is supplied, and open the jaws once device 2 is applied to respective package 3.

Opening devices 2 are conveniently applied by heat sealing; for which purpose, prior to application of respective opening devices 2, packages 3 are heated by means of a hot-air header (not shown) located over the path of the packages, along a portion 62 of path P immediately upstream from application station 11.

Opening devices 2, on the other hand, must be heated locally at a much higher temperature.

This may be done using two preheat blowers 75 emitting respective hot-air jets; and a hydrogen burner 76 generating a microflame for locally melting the thermoplastic material of opening device 2. As shown schematically in Figure 1, blowers 75 and burner 76 are located along portion 62 of path P, just beneath the path of operating heads 55 of application devices 30, and define respective heating stations.

In actual use, rotary table 7 rotates at constant speed; and application devices 30, connected to rotary table 7 by respective variable-speed drive assemblies 31, must be stopped both at station 10 to permit supply of opening devices 2 to respective operating heads 35, and at each of blowers 75 and burner 76 to heat opening devices 2 as long as possible. Over the other portions of path P, application devices 30 rotate integrally with rotary table 7.

The speed of application devices 30 is released from that of rotary table 7 by appropriately designing cams 70, 71.

More specifically (Figure 6), along the portions of path P in which the application devices rotate integrally with rotary table 7, cams 70, 71 have a circular profile, so that, as table 7 rotates, cam follower rollers 59, 69 roll along respective cams 70, 71 without transmitting any control movement to control arm 48.

Along the portions of path P in which the rotation speed of application devices 30 is released from that of table 7, cams 70, 71 have a contoured profile to transmit control movements to arm 48. More specifically, before being stopped at a respective work station (be it station 10 or one of heating devices 75, 76), each application device 30 is accelerated by relative drive assembly 31 with respect to rotary table 7, so as to run along guide 43 "ahead" of the corresponding seating device 8 rotating integrally with the table. Device 30 is then stopped by imparting to it a reverse relative movement along guide 43 in the opposite direction to rotation of the table and at a speed equal to but opposite the peripheral rotation speed of table 7. With respect to a fixed reference system, device 30 is therefore stationary by virtue of the combined rotation of table 7 and the reverse movement with respect to the table. At the end of the stop, application device 30 is again accelerated to realign it with the corresponding seating device 8 by which it has in the meantime been overtaken.

The above forward feed and reverse movements of device 30 along guide 43 are controlled by control arm 48, which rotates one way or the other about axis B in response to control movements received by cams 70, 71, and so pulls or pushes slide 42 of the respective application device '30 along guide 43 by means of respective rod 54.

More specifically, close to each work station at which devices 30 are to be stopped, cam 70 comprises a contoured segment 77 having an increasing lift portion 77a (i.e. with a radius increasing with respect to the mean radius defined by the circular portion); a lift portion 77b decreasing to a minimum value smaller than the mean radius; and a lift portion 77c increasing once more to the mean radius. The slope of portion 77b is designed to so rotate control arm 48 as to effect said reverse relative movement of device 30 along guide 43 at a speed equal to but opposite the conveying speed of table 7, and so stop device 30 with respect to a fixed reference system.

Given that of cam 70, the profile of cam 71 is determined by imposing the condition that both cam followers 59, 69 engage simultaneously, and is therefore not described in detail. More specifically, cam 71 comprises contoured segments 78 having a profile offset angularly with respect to segments 77 of cam 70 and with an inverted lift pattern to take into account the different position of second cam follower 69 with respect to axis B of hinges 50. It should be pointed out, however, that, for the purpose of controlling the movement of arm 48, one cam, e.g. cam 70, would be sufficient; cam 71 and respective cam follower 69 simply serving to ensure contact between cam 70 and cam follower 59 without recourse to elastic means, and so ensure more rigid, accurate, reliable control.

Each cam 70, 71 has a contoured segment 77, 78 at station 10 and three consecutive contoured segments 77, 78 corresponding to heating devices 75, 76.

The Figure 7 graph shows the law of motion of each device 30 in the region of each stopping station, and shows, as a function of time t, the angular position α₇ of table 7 and the angular position α₃₀ of device 30 (absolute, measured as the angle of rotation about axis A) . The first is obviously a straight line of constant slope; while the second clearly shows a first forward feed portion T1 with respect to table 7, a stop portion T2 (constant angle α₃₀), and a second forward feed portion T3 to get back in line with the corresponding seating device 8. The graph also shows the absolute angular speed ω of device 30, which goes from a constant value ω₀, equal to the rotation speed of table 7, to a peak speed corresponding to first forward feed portion T1, to a 0 value at the stopping station, to a second peak speed corresponding to second forward feed portion T3, and then back to value ω₀.

Operation of unit 1, which is partly self-explanatory from the above description, is as follows.

Before each device 8 reaches supply station 10, control arm 22 of lateral retaining member 17 of seating device 8 reaches cam 24 to open member 17. At the same time, the control roller 73a of valve 73 controlling the jaws is activated by cam 74 to open jaws 36.

At station 10, a package 3 is fed into seating device 8, and a respective opening device 2 is fed on to operating head 35 of application device 30. As described above, application device 30 is fed by respective variable-speed drive assembly 31 into station 10 ahead of device 8, and is stopped there long enough for the operation to be performed.

On leaving station 10, lateral retaining member 17 of seating device 8 is closed by arm 22 disengaging cam 24, so that package 3 is retained firmly inside device 8. Similarly, control roller 73a of valve 73 controlling the jaws disengages cam 74 to close jaws 36 about opening device 2.

Device 30 then rotates integrally with rotary table 7 and respective seating device 8 along the next portion of path P, where cams 70, 71 are circular, up to portion 62 of path P corresponding to the package heating header, blowers 75, and burner 76. Along portion 62 of path P, packages 3 are fed and heated continuously by the header to soften the outer polyethylene layer of the packaging material; while devices 30 are substantially "step-fed" and stopped successively beneath each of blowers 75 and burner 76 by the contoured segments 77, 78 of cams 70, 71, so that opening devices 2 are first preheated and then melted locally by the microflame of burner 76. At the end of portion 62, application devices 30 abandon contoured segments 77, 78 of cams 70, 71 and once more rotate steadily and integrally with rotary table 7.

Immediately downstream from portion 62 of path P, seating devices 8 and application devices 30 reach application station 11, where operating heads 35 are pushed down by respective cam followers 39 contacting fixed cam 38, so as to keep opening devices 2 in contact with respective packages 3 until the opening devices are sealed.

Packages 3 complete with opening devices 2 are unloaded on to output conveyor 13 at unloading station 12.

Clearly, changes may be made to unit 1 as described herein without, however, departing from the scope of the accompanying Claims.

## Claims

1. A unit (1) for applying opening devices (2) to packages (3) of pourable food products, the unit comprising a rotary table (7) rotating about a respective axis (A) ; a number of seating devices (8) for seating respective said packages (3), and which are fixed in equally spaced manner to and rotate with said rotary table (7) to feed the packages (3) along a circular path (P) through a number of work stations (10, 75, 76, 11, 12); and a number of application devices (30) for applying said opening devices (2), and which are carried by said rotary table (7) and each associated with a corresponding seating device (8); said unit (1) also comprising a number of variable-speed drive assemblies (31) connecting respective said application devices (30) to said rotary table (7); and control means (70, 71) for controlling said variable-speed drive assemblies (31) to cyclically vary the rotation speed (ω) of said application devices (30) with respect to the rotation speed (ω₀) of said rotary table (7) at at least one (10, 62) of said work stations (10, 75, 76, 11, 12).

2. A unit as claimed in Claim 1, **characterized in that** said variable-speed drive assemblies (31) each comprise an anchoring member (40) fixed rigidly to said rotary table (7); a slide (42) connected rigidly to the respective said application device (30) and mounted to slide along a circumferential guide (43) integral with said rotary table (7); and a mechanism (44) interposed between said anchoring member (40) and said slide (42) and controlled by said control means (70, 71) to move said slide (42) along said guide (43).

3. A unit as claimed in Claim 1 or 2, **characterized in that** said mechanism (44) comprises a control member (48) interacting with and receiving control movements from said control means (70, 71); said mechanism (44) connecting the respective said application device (30) integrally to said rotary table (7) when no control movements are transmitted to said control member (48).

4. A unit as claimed in Claim 3, **characterized in that** said mechanism (44) is an articulated mechanism.

5. A unit as claimed in Claim 3 or 4, **characterized in that** said control means comprise fixed cam means (70; 71) coaxial with said rotary table (7) and having at least one variable-profile segment (77, 78) located at said at least one work station (10, 62) and for transmitting said control movements to said control member (48), and a constant profile along the other portions of said path (P).

6. A unit as claimed in Claim 5, **characterized in that** said articulated mechanism comprises a control arm (48) hinged to said anchoring member (40) about an axis (B) parallel to said axis (A) of said rotary table (7), and defining said control member; and a rod (54) extending in a substantially tangential direction with respect to said rotary table (7) and hinged at the ends to a free end (56) of said control arm (48) and to said slide (42) respectively.

7. A unit as claimed in Claim 6, **characterized in that** said cam means comprise two coaxial cams (70, 71); said control arm (48) having two cam follower devices (59, 69) cooperating with respective cams (70, 71) and acting in opposite directions on said control arm (48) to maintain an unequivocally defined position of said control arm (48).

8. A unit as claimed in any one of the foregoing Claims, **characterized in that** said at least one work station (10, 75, 76) is a station (10) for supplying said opening devices (2) to said application devices (30).

9. A unit as claimed in any one of the foregoing Claims, **characterized in that** said at least one work station (10, 75, 76) is a station (75, 76) for heating said opening devices.

10. A unit as claimed in Claim 9, **characterized by** comprising a number of said work stations (75, 76) for heating said opening devices (2).
